# EUROPÄISCHE PATENTSCHRIFT

(11) **EP 1 138 099 B1**
(45) Veröffentlichungstag und Bekanntmachung des Hinweises auf die Patenterteilung: **16.04.2003**
(21) Anmeldenummer: 99965438.7
(22) Anmeldetag: 03.12.1999
(51) Int. Cl.: H01R 13/115, F16H 61/00, B60R 16/02, B60T 8/36

(54) **STEUERUNG FÜR EIN AUTOMATGETRIEBE**
CONTROL UNIT FOR AN AUTOMATIC GEARBOX
COMMANDE POUR BOITE DE VITESSES AUTOMATIQUE

(30) Priorität: 09.12.1998 DE 19856671
(43) Veröffentlichungstag der Anmeldung: 04.10.2001
(73) Patentinhaber: ZF FRIEDRICHSHAFEN Aktiengesellschaft, 88038 Friedrichshafen (DE)
(72) Erfinder: BEK, Manfred, D-88069 Tettnangim (DE)
(86) Internationale Anmeldenummer: EP9909493
(87) Internationale Veröffentlichungsnummer: WO00035053

(56) Entgegenhaltungen:
- US-A- 5 273 455
- US-A- 5 737 188

## Beschreibung

Die vorliegende Erfindung betrifft eine Steuerung für ein Automatgetriebe, mit einem elektronischen Steuergerät, das über elektrische Verbindungsleitungen mit Aktuatoren wie Druckreglern oder Magnetventilen im Getriebe verbunden ist, wobei die elektrischen Verbindungsleitungen als metallisches Stanzgitter mit Endstücken ausgebildet sind und die Aktuatoren mit metallischen Anschlußfahnen versehen sind.

Automatgetriebe für Kraftfahrzeuge, wie sie von der Anmelderin vielfältig gefertigt werden, weisen ein elektronisches Steuergerät bzw. eine elektrohydraulische Steuerung auf, die oftmals mit einem Elektronikmodul versehen sind, welches mit einem außerhalb des Getriebes angeordneten Kabelstrang verbunden ist. Die elektrischen Leitungen in der Nähe des Elektronikmoduls innerhalb des Getriebes werden dabei üblicherweise als massive Flachleitungen in Form eines Stanzgitters ausgelegt, das z. B. mit einer Steckdose oder mit der elektronischen Getriebesteuerung EGS verbunden ist, welche im Getriebegehäuse angeordnet wird, wonach durch Einstecken eines Gegensteckers die elektrische Verbindung zum Fahrzeugkabelstrang hergestellt wird. Das Stanzgitter ist dabei als ebene zweidimensionale Anordnung hergestellt, das z. B. durch Umspritzen in den Modulträger eingebettet wird.

Neben dem Elektronikmodul sind auch in einem Getriebe eine Vielzahl von Aktuatoren angeordnet, z. B. Druckregler oder Magnetventile, die ebenfalls elektrisch angesteuert werden. Üblicherweise weist jeder Aktuator zwei Blechfahnen an seinem oberen Ende auf, in welche ein zangenartig ausgestaltetes metallisches Blech gesteckt wird, um den elektrischen Kontakt herzustellen. Dieses Zangenblech muß dabei federelastische Eigenschaften aufweisen. Bei den dafür verwendeten Steuerungen werden üblicherweise die oberen Verbindungsleitungen als Stanzgitter ausgebildet, deren Endstücke um 90° abgebogen sind. Auf diese abgebogenen Endstücke wird dann das Zangenblech aufgeschweißt, wonach die Endstücke mit den aufgeschweißten Zangenblechen auf die Anschlußfahnen der Aktuatoren aufgeschoben werden. Eine derartige Verbindung ist aufgrund des zusätzlichen Aufschweißschrittes teuer in der Herstellung.

In der US-A-5,737,188 ist ein elektronisches Steuergerät für ein Automatgetribe bekanntgeworden, bei dem zur elektrischen Ankontaktierung von Aktuatoren an das elektronische Steuergerät federelastische, zangenförmige Gabelkontakte in einem Stanzgitter des elektronischen Steuergerätes angeordnet sind, wie zuvor beschrieben. Die Aktuatoren weisen Flachkontakte auf, die seitlich vom ringförmigen Aktuatorgehäuse angeordnet sind und bei der Montage in den Klemmsitz der Gabelkontakte eingreifen.

Aufgabe der vorliegenden Erfindung ist es, eine Steuerung für ein Automatgetriebs vorzuschlagen, bei dem die Montage erheblich vereinfacht ist, so daß die Herstellungskosten gesenkt werden können.

Ausgehend von einer Steuerung der eingangs näher genannten Art erfolgt die Lösung dieser Aufgabe mit den im kennzeichnenden Teil des Anspruchs 1 angegebenen Merkmalen; vorteilhafte Ausgestaltungen sind in den Unteransprüchen beschrieben.

Die Erfindung sieht also vor, daß die Anschlußfahnen der Aktuatoren als federelastische zangenförmige Gabelkontakte ausgebildet sind, in die die Endstücke der Stanzgitter im Klemmsitz eingreifen. Dies bedeutet, daß der bisher erforderliche Schweißvorgang zum Anordnen der Zangenbleche am Stanzgitter entfällt. Eine weitere Erleichterung der Montage wird dadurch ermöglicht, daß die Gabelkontakte so angeordnet werden, daß die Kontaktpunkte auf einer durch den Mittelpunkt des Aktuators gehenden Linie liegen. Dadurch ist ein größerer Fehlverdrehwinkel bei der Montage zulässig.

Im folgenden wird die Erfindung anhand der Zeichnung näher erläutert, in der einige vorteilhafte Ausführungsbeispiel von zangenförmigen Gabelkontakten an den Aktuatoren und passende Endstücke eines Stanzgitters dargestellt sind.

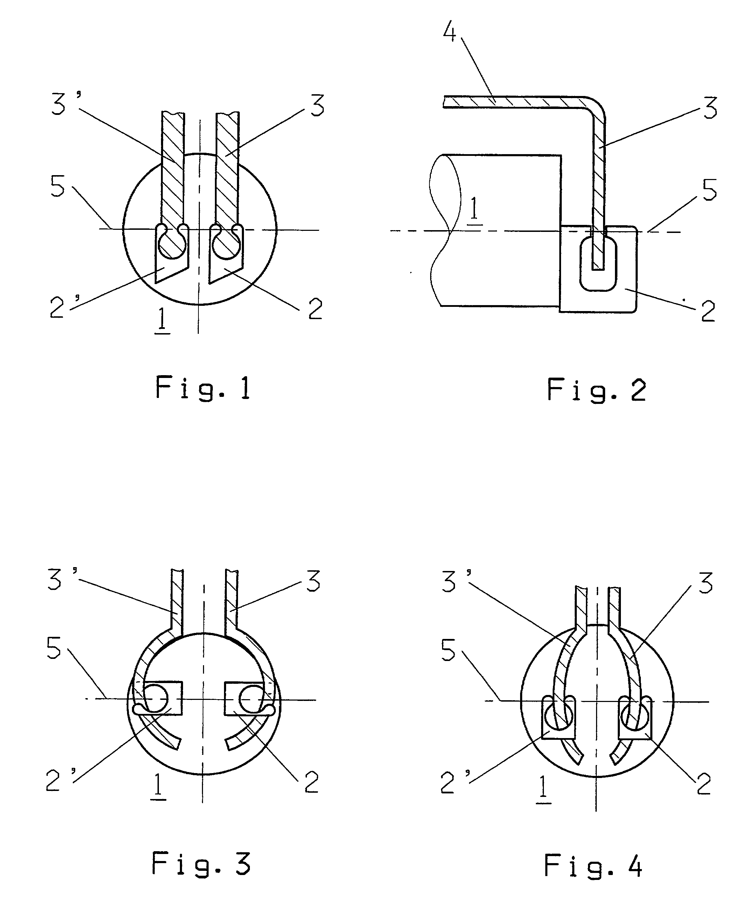

In den Figuren, in denen gleiche Teile mit gleichen Bezugszeichen versehen sind, bedeutet 1 einen in einem Automatgetriebe vorgesehenen Aktuator, z. B. ein Magnetventil oder ein Druckregler. Dieser im allgemeinen zylindrisch ausgebildete Aktuator ist auf seiner ebenen Oberfläche mit zwei metallischen Anschlußfahnen 2, 2' versehen zur Verbindung mit den Endstücken 3, 3' eines schematisch in Fig. 2 mit 4 bezeichneten Stanzgitters, wobei die Endstücke 3, 3' im allgemeinen um 90° abgebogen sind.

Wie Fig. 1 erkennen läßt, sind die beiden Anschlußfahnen 2, 2' des Aktuators 1 als federelastische zangenförmige Gabelkontakte ausgebildet, in welche die Endstücke 3, 3' des Stanzgitters 4 im Klemmsitz eingreifen. Im Gegensatz zur bisherigen Ausführung sind also die Anschlußfahnen an den Aktuatoren als Zangenblech ausgeführt, sodass ein einfaches Abbiegen der Endstücke 3 des Stanzgitters 4 genügt, um eine sichere elektrische Kontaktierung herbeizuführen.

Bei dem in Fig. 1 dargestellten Ausführungsbeispiel sind die beiden Anschlußfahnen 2, 2' des Aktuators 1 in zwei achsparallelen Ebenen angeordnet, wobei die Öffnungen in den Anschlußfahnen 2, 2' nach oben zeigen.

Fig. 2 zeigt eine Seitenansicht eines Aktuators 1 ebenfalls mit zwei zangenförmigen Gabelkontakten 2, wobei die beiden Anschlußfahnen ebenfalls in zwei achsparallelen Ebenen angeordnet sind. Im Gegensatz zu dem in Fig. 1 dargestellten Ausführungsbeispiel liegen hier die beiden Öffnungen der Anschlußfahnen in einer radialen Ebene parallel zueinander.

Bei dem in Fig. 3 dargestellten Ausführungsbeispiel befinden sich die beiden Anschlußfahnen 2, 2' des Aktuators 1 in einer radialen Ebene, sind jedoch einander abgewandt, d. h. spiegelsymmetrisch zueinander angeordnet. Die Endstücke 3, 3' des Stanzgitters sind hierbei im wesentlichen halbkreisförmig ausgebildet und greifen in die entsprechenden Öffnungen der beiden Anschlußfahnen 2, 2' im Klemmsitz ein.

Bei dem in Fig. 4 dargestellten Ausführungsbeispiel befinden sich die beiden Anschlußfahnen 2, 2' ebenfalls in einer radialen Ebene und liegen spiegelsymmetrisch parallel zueinander, wobei die beiden Öffnungen in die gleiche Richtung zeigen. Die entsprechenden Endstücke 3, 3', die mit dem Stanzgitter verbunden sind, sind hierbei im wesentlichen elliptisch ausgeführt; selbstverständlich sind alle möglichen geometrischen Formeln für die Endstücke 3, 3' möglich; wesentlich ist, daß kein Zangenblech mehr auf die Endstücke 3, 3' aufgeschweißt werden muß, sodass der zusätzliche bisher übliche Arbeitsgang entfällt.

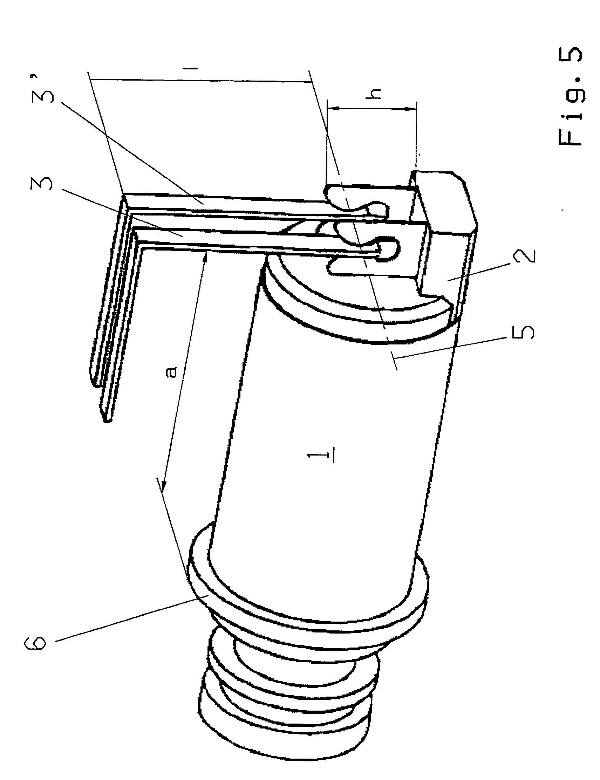

Fig. 5 zeigt in perspektivischer, vergrößerter Ansicht einen Aktuator mit einem Flansch 6, wobei aus dieser Darstellung ersichtlich ist, daß in vorteilhafter Weise die Kontaktpunkte zwischen den Gabelkontakten 2, 2' und den Endstücken 3, 3' auf einer Linie 5 liegen, die die Mittelachse des Aktuators durchsetzt.

Für einen gegebenen Aktuator beträgt die Länge 1 der Endstücke 36 mm, die Höhe h der Gabelkontakte 2, 2' etwa 14 mm und der Abstand a zwischen Flansch und den Endstücken 3, 3' mindestens 37 mm.

## Patentansprüche

1. Steuerung für ein Automatgetriebe, mit einem Steuergerät, das über elektrische Verbindungsleitungen mit Aktuatoren, wie Druckreglern oder Magnetventilen im Getriebe verbunden ist, wobei die elektrischen Verbindungsleitungen als metallisches Stanzgitter mit Endstücken ausgebildet sind und die zylindrisch ausgebildeten Aktuatoren mit metallischen Anschlußfahnen versehen sind, **dadurch gekennzeichnet, daß** die Anschlußfahnen der Aktuatoren (1) als federelastische zangenförmige Gabelkontakte (2, 2') ausgebildet sind, in die die Endstücke (3, 3') des Stanzgitters (4) im Klemmsitz eingreifen und daß die Gabelkontakte derart angeordnet sind, daß die Kontaktpunkte auf einer die Mittelachse des Aktuators durchsetzenden Linie (5) liegen.

2. Steuerung nach Anspruch 1, **dadurch gekennzeichnet, daß** die Gabelkontakte (2, 2') in zwei achsparallel zueinander verlaufenden Ebenen angeordnet sind.

3. Steuerung nach Anspruch 1, **dadurch gekennzeichnet, daß** die Gabelkontakte in einer radial verlaufenden Ebene angeordnet sind.

4. Steuerung nach einem der vorhergehenden Ansprüche, **dadurch gekennzeichnet, daß** die Endstükke (3, 3') rechteckig sind.

5. Steuerung nach einem der vorhergehenden Ansprüche, **dadurch gekennzeichnet, daß** die Endstükke (3, 3') halbkreisförmig sind.

6. Steuerung nach einem der vorhergehenden Ansprüche, **dadurch gekennzeichnet, daß** die Endstükke (3, 3') elliptisch sind.

## Claims

1. Control unit for an automatic transmission, comprising a control apparatus which is connected to actuators in the transmission such as pressure regulators or magnetic valves by means of electric connecting lines, whereby the electric connecting lines are metallic stamped grid with end pieces and the actuators are provided with metallic terminal lugs, **characterized in that** the terminal lugs of the actuators (1) are figured as spring elastic, tong-shaped tuning fork contacts (2, 2'). The end pieces (3, 3') of the stamped grid (4) engage said tuning fork contacts in a press fit on a middle axis line (5) of the actuator.

2. Control unit according to claim 1, **characterized in that** the fork contacts (2, 2') are arranged on two levels parallel to each other with regard to their axes.

3. Control unit according to claim 1, **characterized in that** the fork contacts are arranged on a radially running level.

4. Control unit according to one of the previous claims, **characterized in that** the end pieces (3, 3') are rectangular.

5. Control unit according to one of the previous claims, **characterized in that** the end pieces (3, 3') are semicircular.

6. Control unit according to one of the previous claims, **characterized in that** the end pieces (3, 3') are elliptic.

## Revendications

1. Commande pour une boîte de vitesses automatique comprenant un appareil de commande qui est relié par des lignes de liaison électriques à des actionneurs tels que des régulateurs de pression ou des électrovalves situées dans la boîte de vitesses, les lignes de liaison électriques étant constituées par une grille métallique découpée pourvue de queues et les actionneurs de forme cylindrique étant pourvus de cosses de connexion métalliques, **caractérisée en ce que** les cosses de connexion des actionneurs (1) sont constituées par des contacts à fourche (2, 2') en forme de pince, élastiques à la façon d'un ressort, dans lesquels les queues (3, 3') de la grille découpée (4) sont engagées avec un ajustement serré, et **en ce que** les contacts à fourche sont disposés de manière que les points de contact se trouvent sur une ligne (5) qui coupe l'axe médian de l'actionneur.

2. Commande selon la revendication 1, **caractérisée en ce que** les contacts à fourche (2, 2') sont disposés dans deux plans parallèles à l'axe l'un par rapport à l'autre.

3. Commande selon la revendication 1, **caractérisée en ce que** les contacts à fourche sont disposés dans un plan radial.

4. Commande selon l'une des revendications précédentes, **caractérisée en ce que** les queues (3, 3') sont coudées à angle droit.

5. Commande selon l'une des revendications précédentes, **caractérisée en ce que** les queues (3, 3') sont semi-circulaires.

6. Commande selon l'une des revendications précédentes, **caractérisée en ce que** les queues (3, 3') sont elliptiques.
